# FASCICULE DE BREVET EUROPEEN

(11) **EP 4 121 688 B1**
(45) Date de publication et mention de la délivrance du brevet: **09.12.2026**
(21) Numéro de dépôt: 21716488.8
(22) Date de dépôt: 09.03.2021
(51) Int. Cl.: F21V 5/02, F21V 5/04, F21V 5/08, G02B 3/00, G02B 19/00, G02B 27/09

(54) **SYSTÈME D'ÉCLAIRAGE À FAISCEAU LUMINEUX ASYMÉTRIQUE**
BELEUCHTUNGSSYSTEM MIT ASSYMETRISCHEM LICHTSTRAHL
LIGHTING SYSTEM WITH ASYMMETRICAL LIGHT BEAM

(30) Priorité: 17.03.2020 FR 2002604
(43) Date de publication de la demande: 25.01.2023
(73) Titulaire: Gaggione SAS, 01460 Montréal-la-Cluse (FR)
(72) Inventeur: LAURET, Jean-Pierre, 01100 OYONNAX (FR)
(74) Mandataire: Germain Maureau
(86) Numéro de dépôt international: PCT/FR2021/050399
(87) Numéro de publication internationale: WO 2021/186123

(56) Documents cités:
- WO-A1-2015/110392
- WO-A1-2015/183870
- US-A1- 2019 094 557

## Description

### Domaine de l'invention

La présente invention se rapporte à un système d'éclairage à faisceau lumineux asymétrique. Un tel système permet d'éclairer une surface plane ou quasi plane qui est sensiblement parallèle à l'axe de la source lumineuse. Un tel dispositif est particulièrement adapté à l'éclairage de surfaces murales telles que des façades de bâtiments ou des affiches par exemple.

### Art antérieur

De manière connue, le document EP3369988 présente un luminaire comprenant un réflecteur prenant la forme d'une coque adaptée pour obtenir un faisceau lumineux émergent ayant une composante perpendiculaire au faisceau lumineux provenant d'une source de lumière. En particulier, le document EP3369988 décrit des coques réfléchissantes conçues pour irradier une surface de paroi faisant face audites coques réfléchissantes uniquement avec de la lumière indirecte réfléchie, tandis qu'une composante de lumière directe non réfléchie du faisceau lumineux est limitée à une surface de paroi opposée, à partir de laquelle la coque de réflecteur fait face, et / ou est limitée au sol.

Toutefois, ces solutions ne donnent pas une entière satisfaction.

En effet, la réalisation de la surface optique est particulièrement complexe car la surface optique comporte un très grand nombre de micro-facettes, lesquelles doivent être réalisées avec une rugosité très basse et un rayon d'arête aux jointures très faible. De plus, un système tel que décrit dans le document EP3369988 présente un encombrement important peu propice à une utilisation variée. Enfin, la solution proposée par EP3369988 nécessite une métallisation, ce qui implique une étape supplémentaire dans la fabrication et donc des coûts de production augmentés. Le document WO2015/183870 propose un système d'éclairage ayant une lentille avec un profil structuré.

La présente invention a pour but de résoudre tout ou partie des inconvénients mentionnés ci-dessus.

### Exposé de l'invention

A cet effet, la présente invention concerne un dispositif de mise en forme d'un faisceau lumineux primaire, tel que le dispositif de mise en forme comprend une pluralité de structures de mise en forme, chaque structure de mise en forme comprenant au moins une première surface optique configurée pour diriger des faisceaux émergents en direction d'une paroi à éclairer tel que au moins deux structures de mise en forme parmi la pluralité de structures de mise en forme sont configurées pour diriger les faisceaux émergents respectifs sur au moins une zone commune de la paroi à éclairer, tel que les structures de mise en forme sont régulièrement réparties selon un axe d'espacement sensiblement perpendiculaire à un axe intermédiaire parallèle au faisceau lumineux primaire et s'étendent longitudinalement selon une direction d'extension sensiblement perpendiculaire à l'axe intermédiaire et à l'axe d'espacement.

Une telle disposition, permet une bonne homogénéité de l'éclairage de la paroi à éclairer. En effet, un tel dispositif de diffusion permet de mettre en forme le faisceau issu du collimateur de manière homogène sur la paroi à éclairer.

Une telle disposition permet d'obtenir une bonne homogénéité de l'éclairage de la paroi à éclairer et cela indépendamment de la qualité du faisceau issu du collimateur. En effet, la paroi à éclairer étant éclairée par le faiseaux émergent issu d'au moins deux structures de mise en forme, une moyenne de l'éclairage s'applique naturellement et une bonne homogénéité est obtenue.

Au sens de la présente invention, sensiblement parallèle signifie parallèle à 5° près.

Au sens de la présente invention, sensiblement parallèle signifie parallèle à 20° près.

Au sens de la présente invention, sensiblement perpendiculaire signifie perpendiculaire à 5° près.

Au sens de la présente invention, sensiblement perpendiculaire signifie perpendiculaire à 20° près.

Au sens de la présente invention, une zone commune est une zone quelconque de la paroi à éclairer.

Au sens de la présente invention, une zone commune est une zone comprise dans un angle d'émission allant de 1° à 89° tel que l'angle d'émission est l'angle entre le plan d'éclairage défini par la paroi à éclairer et le faisceau émergent.

Au sens de la présente invention, une zone commune est l'intégralité de la paroi à éclairer.

Selon un mode de réalisation, le dispositif de mise en forme est configuré pour mettre en forme les faisceaux émergents respectifs sur l'intégralité de la paroi à éclairer, tel que la zone commune représente une partie de ladite paroi à éclairer.

Selon un mode de réalisation, le faisceau lumineux primaire est issu d'un collimateur.

Selon un mode de réalisation, la paroi à éclairer est disposée de telle sorte à ce qu'un plan d'éclairage défini par ladite paroi à éclairer et un axe intermédiaire parallèle au faisceau lumineux primaire soient sensiblement parallèles.

Selon un mode de réalisation, les structures de mises en forme de la pluralité de structures de mise en forme sont identiques.

Une telle disposition, permet une bonne homogénéité de l'éclairage de la paroi à éclairer. En effet, un tel dispositif de mise en forme permet de mettre en forme le faisceau issu du collimateur de manière homogène sur la paroi à éclairer, l'homogénéité étant obtenue par un effet de moyennage entre toutes les structures de mise en forme.

Selon un mode de réalisation, chaque structure de mise en forme comprend une deuxième surface optique configurée pour réaliser une réflexion interne totale du faisceau lumineux primaire.

Une telle disposition permet d'obtenir une grande dynamique d'angle pour le faisceau émergent. En effet, la réflexion totale interne permet d'adresser une dynamique d'angles beaucoup plus large que la réfraction.

Une telle disposition permet une mise en forme tout en conservant un faible encombrement.

Selon un mode de réalisation, chaque structure de mise en forme comprend une deuxième surface optique configurée pour réaliser une transmission/réfraction du faisceau lumineux primaire.

Selon un mode de réalisation, au moins une structure de mise en forme comprend une deuxième surface optique configurée pour réaliser une transmission/réfraction du faisceau à diffuser et au moins structure de mise en forme comprend une deuxième surface optique configurée pour réaliser une réflexion totale interne du faisceau lumineux primaire.

Selon un mode de réalisation, la deuxième surface optique est convergente. En effet, une telle disposition permet d'éviter que la lumière d'une structure de mise en forme soit dirigée vers une autre structure de mise en forme. Sinon le faisceau émergent serait intercepté par une structure de mise en forme voisine et ne serait pas redirigé vers la paroi à éclairer.

Selon un mode de réalisation, la première surface optique de chaque structure de mise en forme défini un plan optique sensiblement parallèle à l'axe intermédiaire.

Une telle disposition permet un angle de déviation allant de 1° à 89°. En effet, chaque faisceau lumineux émergent de chaque structure de mise en forme est donc orienté de sorte à ne pas éclairer les structures de mise en forme adjacentes.

Selon un mode de réalisation, la pluralité de structures de mise en forme comprend au moins 10 structures de mise en forme.

Une telle disposition permet d'obtenir au moins 10 faisceaux émergents, un par structure de mise en forme, et ainsi de multiples portions de faisceaux émergents se superposent afin d'obtenir un résultat homogène sur la paroi à éclairer, et cela indépendamment des défauts de répartition ou d'homogénéité du faisceau lumineux primaire.

Selon un mode de réalisation, les au moins 10 structures de mise en forme parmi la pluralité de structures de mise en forme sont configurées pour mettre en forme le faisceau émergent sur au moins sur une zone commune de la paroi à éclairer.

Selon un mode de réalisation, chaque structure de mise en forme de la pluralité de structures de mise en forme s'étend selon un motif élémentaire.

Une telle disposition a pour effet d'étaler la lumière selon la direction d'extension et permet ainsi d'éviter une trop forte concentration de la lumière ainsi qu'une zone commune trop étroite.

Selon un mode de réalisation, le motif élémentaire est sensiblement une B-spline.

Selon un mode de réalisation, le motif élémentaire est sensiblement un arc de cercle.

Selon un mode de réalisation, le motif élémentaire est sensiblement une conique.

Selon un mode de réalisation, le motif élémentaire se répète selon la direction d'extension.

Une telle disposition a pour effet d'étaler la lumière selon la direction d'extension plus efficacement et permet ainsi d'éviter une trop forte concentration de la lumière ainsi qu'une zone commune trop étroite.

Selon un mode de réalisation, le motif élémentaire est sensiblement sinusoïdal.

Une telle disposition permet une meilleure homogénéité de la lumière tout en permettant une zone commune large.

Selon un mode de réalisation, chaque structure de mise en forme de la pluralité de structures de mise en forme s'étend de manière continue.

Une telle disposition permet d'éviter les projections d'artefacts lumineux sur la surface à éclairer.

Selon un mode de réalisation, chaque structure de mise en forme de la pluralité de structures de mise en forme s'étend de manière discontinue.

Au sens de la présente invention, le terme « s'étend de manière continue » signifie « forme une courbe continue ».

Selon un mode de réalisation, chaque structure de mise en forme de la pluralité de structures de mise en forme s'étend de manière dérivable.

Une telle disposition permet d'éviter les projections d'artefacts lumineux sur la surface à éclairer.

Selon un mode de réalisation, la dérivée du motif est continue.

Selon un mode de réalisation, chaque structure de mise en forme de la pluralité de structures de mise en forme s'étend selon un motif non dérivable. Une telle disposition permet de faciliter l'usinage du dispositif de diffusion.

Au sens de la présente invention, le terme « s'étend de manière dérivable » signifie « forme une courbe continue et dérivable, à dérivée continue ».

Selon un mode de réalisation, le dispositif de mise en forme comprend une optique de collimation configurée pour obtenir le faisceau lumineux primaire à partir d'un faisceau lumineux incident.

Une telle disposition permet d'obtenir un dispositif de diffusion complet et compact.

Une telle disposition permet d'obtenir facilement un effet de zoom. En effet, un dispositif de diffusion selon l'invention permet d'obtenir un faisceau émergent élargie en rapprochant une source de lumière émettant le faisceau incident, ou plus généralement en générant le faisceau primaire au moyen d'une optique de collimation à faisceau variable.

Selon un mode de réalisation, le dispositif de mise en forme est réalisé en poly-méthacrylate de méthyle, communément appelé acrylique.

Selon un mode de réalisation, le dispositif de mise en forme est réalisé en polycarbonate.

Selon un mode de réalisation, le dispositif de mise en forme est réalisé en thermoplastique.

Selon un mode de réalisation, le dispositif de mise en forme est réalisé en silicone optique.

Selon un mode de réalisation, le dispositif de mise en forme comprend une source de lumière configurée pour fournir le faisceau lumineux incident.

Selon un mode de réalisation, la source de lumière est une diode électroluminescente.

Selon un mode de réalisation, l'optique de collimation et la pluralité de structures de mise en forme sont formés d'une pièce mécanique unique monobloc.

Une telle disposition permet de simplifier la fabrication du dispositif en n'ayant qu'un seul composant optique à assembler.

Selon un mode de réalisation, la pluralité de structures de mise en forme est constituée d'une pluralité de sous-ensembles de mise en forme, avec chaque sous-ensemble de mise en forme comprenant une pluralité de structures de mise en forme tel que au moins deux sous-ensembles de mise en forme sont configurés pour mettre en forme le faisceau lumineux émergent sur au moins la zone commune de la paroi à éclairer.

Une telle disposition, permet une bonne homogénéité de l'éclairage de la paroi à éclairer. En effet, un tel dispositif de diffusion permet de mettre en forme le faisceau issu du collimateur de manière homogène sur la paroi à éclairer. Une telle disposition permet de simplifier l'architecture des surfaces optiques élémentaires composant les sous-ensembles.

Les différents aspects définis ci-dessus non incompatibles peuvent être combinés.

### Brève description des figures

L'invention sera encore mieux comprise à l'aide de la description détaillée qui est exposée ci-dessous en regard des dessins annexés dans lesquels :
- [Fig. 1] représente une vue en coupe d'un dispositif de mise en forme conformément à la présente invention ;
- [Fig. 2] représente une vue schématique d'une structure de mise en forme conformément à la présente invention ;
- [Fig. 3] représente une vue schématique d'une pluralité de structures de mise en forme ainsi qu'une paroi à éclairer conformément à la présente invention ;
- [Fig. 4] représente un mode de réalisation d'un dispositif de mise en forme conformément à la présente invention ;
- [Fig. 5] représente un autre mode de réalisation d'un dispositif de mise en forme conformément à la présente invention ;
- [Fig. 6] représente une vue en coupe d'un dispositif de mise en forme conformément à la présente invention ; et
- [Fig. 7] représente une vue de dessus d'un dispositif de mise en forme conformément à la présente invention ainsi que l'étalement de faisceaux émergents à travers une structure de mise en forme conformément à la présente invention.

### Description en référence aux figures

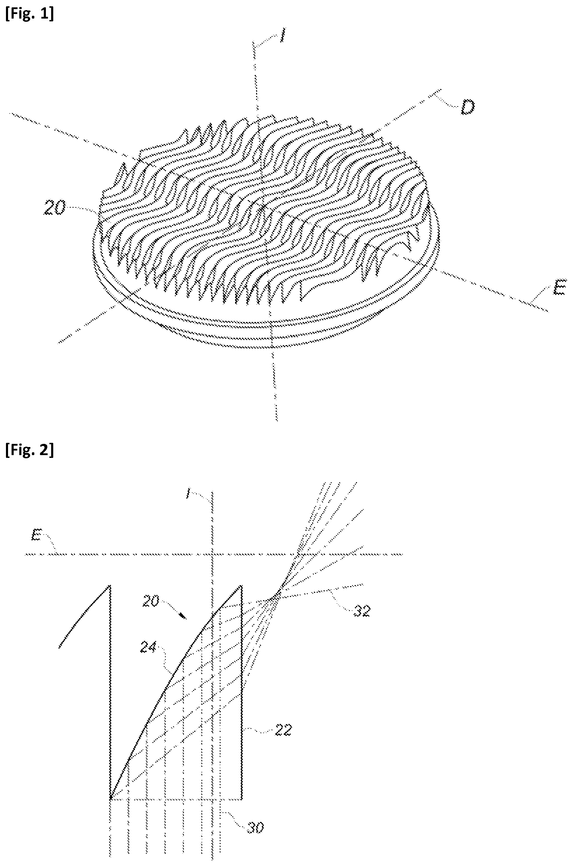

Tel que représenté aux figures 1 et 2, le dispositif de mise en forme 10 est un dispositif de mise en forme d'un faisceau lumineux primaire 30 issu d'un collimateur.

A cet effet, le dispositif de mise en forme 10 comprend une pluralité de structures de mise en forme 20 identiques les unes aux autres d'et comprenant au moins 10 structures de mise en forme 20. Un dispositif de mise en forme 10 comprenant une pluralité de structures de mises en formes 20 identiques les unes aux autres, permet une bonne homogénéité de l'éclairage de la paroi à éclairer 40. En effet, un tel dispositif mise en forme permet de mettre en forme le faisceau issu du collimateur de manière homogène sur la paroi à éclairer 40, l'homogénéité étant obtenue par un effet de moyennage entre toutes les structures de mise en forme. De plus, une telle disposition permet d'obtenir au moins 10 faisceaux émergents 32, un par structure de mise en forme 20, et ainsi de multiples portions de faisceaux émergents 32 se superposent afin d'obtenir un résultat homogène sur la paroi à éclairer 40, et cela indépendamment des défauts de répartition ou d'homogénéité du faisceau lumineux primaire 30.

Selon un mode de réalisation, les au moins 10 structures de mise en forme parmi la pluralité de structures de mise en forme sont configurées pour mettre en forme le faisceau émergent sur au moins sur une zone commune de la paroi à éclairer

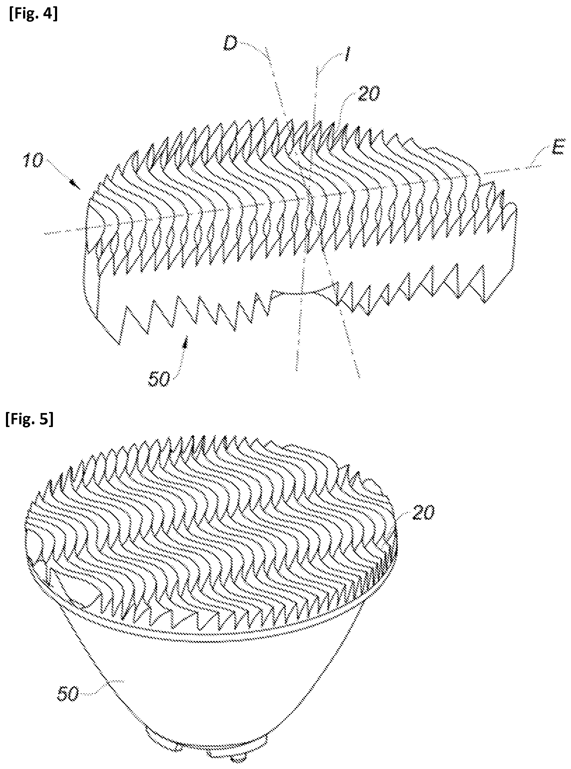

Ladite pluralité de structures de mise en forme20 comprenant des structures de mise en forme 20 régulièrement réparties selon un axe d'espacement E sensiblement perpendiculaire à un axe intermédiaire I parallèle au faisceau lumineux primaire 30 et s'étendent longitudinalement selon une direction d'extension D sensiblement perpendiculaire à l'axe intermédiaire et à l'axe d'espacement. Une telle configuration est particulièrement visible sur les figures 1 et 4 par exemple. Au sens de la présente invention, sensiblement perpendiculaire signifie perpendiculaire à 5° près.

Chaque structure de mise en forme 20 comprend une première surface optique 22 et une deuxième surface optique 24. La première surface optique 22 est configurée pour diriger des faisceaux émergents 32 en direction d'une paroi à éclairer 40 de telle sorte à ce qu'au moins deux structures de mise en forme 20 parmi la pluralité de structures de mise en forme 20 sont configurées pour diriger les faisceaux émergents 32 respectifs sur au moins une zone de la paroi à éclairer 40 comprise dans un angle d'émission allant de 1° à 89° tel que l'angle d'émission est l'angle entre un plan d'éclairage défini par la paroi à éclairer 40 et le faisceau émergent 32. Une telle disposition, permet une bonne homogénéité de l'éclairage de la paroi à éclairer. En effet, un tel dispositif de diffusion 10 permet de mettre en forme le faisceau lumineux primaire 30 de manière homogène sur la paroi à éclairer. De plus, Une telle disposition permet d'obtenir une bonne homogénéité de l'éclairage de la paroi à éclairer 40 et cela indépendamment de la qualité du faisceau lumineux primaire 30. En effet, la paroi à éclairer 40 étant éclairée par le faisceaux émergent 32 issu d'au moins deux structures de mise en forme 20, une moyenne de l'éclairage s'applique naturellement et une bonne homogénéité est obtenue.

La deuxième surface optique 24 est, quant à elle, configurée pour réaliser une réflexion interne totale du faisceau lumineux primaire 30. Une telle disposition permet d'obtenir une grande dynamique d'angle pour le faisceau émergent. En effet, la réflexion totale interne permet d'adresser une dynamique d'angles beaucoup plus large que la réfraction. Une telle disposition permet également une mise en forme tout en conservant un faible encombrement. La deuxième surface optique 24 est convergente. En effet, il est nécessaire d'utiliser une deuxième surface optique 24 convergente afin d'éviter que la lumière d'une structure de mise en forme 20 soit dirigée vers une autre structure de mise en forme 20. En effet, sans cela, le faisceau émergent 32 serait intercepté par une structure de mise en forme 20 voisine et ne serait redirigé vers la paroi à éclairer 40 .

Cependant, selon un autre mode de réalisation, chaque structure de mise en forme 20 comprend une deuxième surface optique configurée pour réaliser une transmission/réfraction du faisceau lumineux primaire 30.

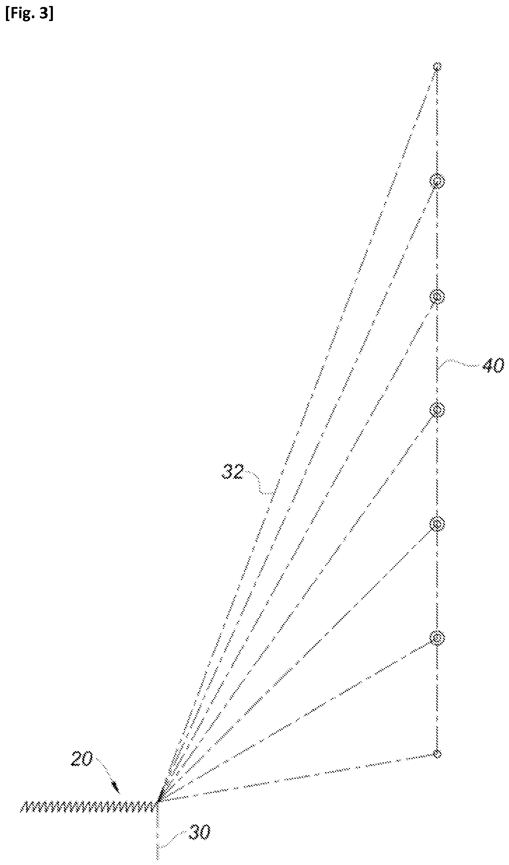

Selon un mode de réalisation, le dispositif de mise en forme 10 est configuré pour mettre en forme les faisceaux lumineux émergents 32 respectifs sur l'intégralité de la paroi à éclairer, tel que la zone commune représente une partie de ladite paroi à éclairer 40. Une telle disposition permet d'obtenir un éclairage plus intense sur la zone commune que sur le reste de la paroi à éclairer 40. Une telle configuration est particulièrement visible sur la figure 3 par exemple.

Une telle disposition permet également d'obtenir un dispositif de mise en forme 10 capable d'éclairer une paroi à éclairer 40 disposée de telle sorte à ce qu'un plan d'éclairage défini par ladite paroi à éclairer 40 et l'axe intermédiaire I soient sensiblement parallèles.

Selon un mode de réalisation, la première surface optique 22 de chaque structure de mise en forme 20 défini un plan optique sensiblement parallèle à l'axe intermédiaire I. Une telle disposition permet un angle de déviation allant de 1° à 89°. En effet, chaque faisceaux lumineux émergent 32 de chaque structure de mise en forme 20 est donc orienté de sorte à ne pas éclairer les structures de mise en forme 20 adjacentes. Au sens de la présente invention, sensiblement parallèle signifie parallèle à 5° près.

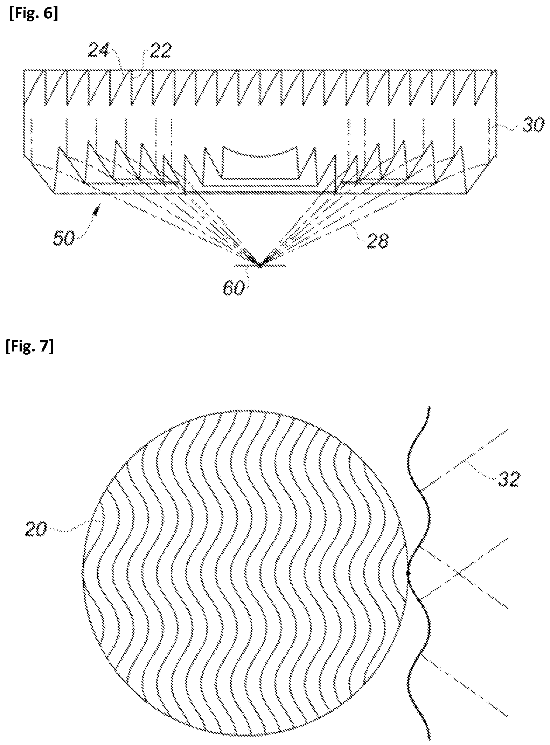

Selon un mode de réalisation, chaque structure de mise en forme 20 de la pluralité de structures de mise en forme 20 s'étend de manière continue et dérivable selon un motif élémentaire sinusoïdale qui se répète selon la direction d'extension D. Une telle disposition a pour effet d'étaler la lumière selon la direction d'extension D et permet ainsi d'éviter une trop forte concentration de la lumière ainsi qu'une zone commune trop étroite, tel que représenté sur la figure 7. Grâce à l'absence de discontinuités, une telle disposition permet d'éviter les projections d'artefacts lumineux sur la surface à éclairer 40.

Au sens de la présente invention, le terme « s'étend de manière continue » signifie « forme une courbe continue ».

Au sens de la présente invention, le terme « s'étend de manière dérivable » signifie « forme une courbe continue et dérivable, à dérivée continue ».

Selon un mode de réalisation, la dérivée du motif est continue.

Selon un mode de réalisation, chaque structure de mise en forme 20 de la pluralité de structures de mise en forme 20 s'étend selon un motif non dérivable. Une telle disposition permet de faciliter l'usinage du dispositif de diffusion 10.

Selon un mode de réalisation, chaque structure de mise en forme de la pluralité de structures de mise en forme s'étend de manière discontinue.

Selon un mode de réalisation, le motif élémentaire est sensiblement une B-spline.

Selon un mode de réalisation, le motif élémentaire est sensiblement un arc de cercle.

Selon un mode de réalisation, le motif élémentaire est sensiblement une conique.

Comme représenté sur les figures 4, 5 et 6, le dispositif de mise en forme 10 comprend une optique de collimation 50 configurée pour obtenir le faisceau lumineux primaire 30 à partir d'un faisceau lumineux incident 28. Une telle disposition permet d'obtenir un dispositif de diffusion 10 complet et compact. Une telle disposition permet d'obtenir facilement un effet de zoom. En effet, un dispositif de diffusion selon l'invention permet d'obtenir un faisceau émergent élargie en rapprochant une source de lumière 60 émettant le faisceau incident 28.

Plus particulièrement, la figure 4 représente un dispositif de mise en forme 10 comprenant une optique de collimation 50 particulièrement adaptée pour une source de lumière 60 de type assemblage de LEDs individuelles communément appelé « chip-on-board », alors que la figure 5 représente un dispositif de mise en forme comprenant une optique de collimation 50 particulièrement adaptée pour une source de lumière 60 de type LED individuelle, LED étant l'acronyme Anglais de diode électroluminescente.

Selon un mode de réalisation, l'optique de collimation 50 et la pluralité de structures de mise en forme 20 sont formés d'une pièce mécanique unique monobloc. La pièce mécanique unique monobloc étant réalisé en un matériau optique quelconque tel que le poly-méthacrylate de méthyle ou PMMA, communément appelé acrylique, en polycarbonate ou PC, en thermoplastique, ou encore en silicone optique.

Une telle disposition permet de simplifier la fabrication du dispositif en n'ayant qu'un seul composant optique à assembler.

Selon un mode de réalisation, le dispositif de mise en forme comprend une source de lumière 60 configurée pour fournir le faisceau lumineux incident 28.
Selon un mode de réalisation, la pluralité de structures de mise en forme 20 est constituée d'une pluralité de sous-ensembles de mise en forme, avec chaque sous-ensemble de mise en forme comprenant une pluralité de structures de mise en forme 20 tel que au moins deux sous-ensembles de mise en forme sont configurés pour mettre en forme le faisceau lumineux émergent 32 sur au moins la zone commune de la paroi à éclairer 40. Une telle disposition, permet une bonne homogénéité de l'éclairage de la paroi à éclairer 40. En effet, un tel dispositif de diffusion permet de mettre en forme le faisceau issu de l'optique de collimation 50 de manière homogène sur la paroi à éclairer 40. Une telle disposition permet de simplifier l'architecture des première et deuxième surfaces optiques 22,24 composant les sous-ensembles.

Au sens de la présente invention, une optique de collimation signifie un collimateur.

Selon un mode de réalisation, la géométrie de la première et de la deuxième surface optique peut-être calculée à l'aide d'un logiciel de conception et d'ingénierie optique 3D tel que « LightTools » par exemple.

Bien entendu, l'invention n'est pas limitée aux modes de réalisation représentés et décrits ci-avant, mais en couvre au contraire toutes les variantes.

## Revendications

1. Dispositif de mise en forme (10) d'un faisceau lumineux primaire (30) issu d'un collimateur, dans lequel le dispositif de mise en forme comprend une pluralité de structures de mise en forme (20), chaque structure de mise en forme (20) comprenant au moins une première surface optique (22) configurée pour diriger des faisceaux émergents (32) en direction d'une paroi à éclairer (40) dans lequel au moins deux structures de mise en forme (20) parmi la pluralité de structures de mise en forme (20) sont configurées pour diriger les faisceaux émergents (32) respectifs sur au moins une zone commune de la paroi à éclairer (40), dans lequel les structures de mise en forme (20) sont régulièrement réparties selon un axe d'espacement (E) sensiblement perpendiculaire à un axe intermédiaire (I) parallèle au faisceau lumineux primaire (30) et s'étendent longitudinalement selon une direction d'extension (D) sensiblement perpendiculaire à l'axe intermédiaire et à l'axe d'espacement, la première surface optique (22) de chaque structure de mise en forme (20) définissant un plan optique sensiblement parallèle à l'axe intermédiaire (I) ;
chaque structure de mise en forme (20) de la pluralité de structures de mise en forme (20) s'étendant en outre selon un motif élémentaire, ledit motif élémentaire se répétant selon la direction d'extension (D), et étant sensiblement sinusoïdal.

2. Dispositif de mise en forme (10) selon la revendication 1 dans lequel les structures de mises en forme (20) de la pluralité de structures de mise en forme (20) sont identiques.

3. Dispositif de mise en forme selon l'une quelconque des revendications 1 ou 2 dans lequel chaque structure de mise en forme (20) comprend une deuxième surface optique (24) configurée pour réaliser une réflexion interne totale du faisceau lumineux primaire (30).

4. Dispositif de mise en forme (10) selon l'une quelconque des revendications 1 à 3, dans lequel la pluralité de structures de mise en forme (20) comprend au moins 10 structures de mise en forme (20).

5. Dispositif de mise en forme (10) selon l'une quelconque des revendication 1 à 4, dans lequel chaque structure de mise en forme (20) de la pluralité de structures de mise en forme (20) s'étend de manière continue.

6. Dispositif de mise en forme (10) selon la revendication 5, dans lequel chaque structure de mise en forme (20) de la pluralité de structures de mise en forme (20) s'étend de manière dérivable.

7. Dispositif de mise en forme (10) selon l'une quelconque des revendications 1 à 6, dans lequel le dispositif de mise en forme (10) comprend une optique de collimation (50) configurée pour obtenir le faisceau lumineux primaire (30) à partir d'un faisceau lumineux incident (28).

8. Dispositif de mise en forme (10) selon la revendication 7, dans lequel le dispositif de mise en forme comprend une source de lumière configurée pour fournir le faisceau lumineux incident (28).

9. Dispositif de mise en forme (10) selon la revendication 8, dans lequel la source de lumière est une diode électroluminescente.

10. Dispositif de mise en forme (10) selon la revendication 7, dans lequel l'optique de collimation (50) et la pluralité de structures de mise en forme (20) sont formés d'une pièce mécanique unique monobloc.

11. Dispositif de mise en forme (10) selon l'une quelconque des revendications 1 à 10, dans lequel la pluralité de structures de mise en forme (20) est constituée d'une pluralité de sous-ensembles de mise en forme, avec chaque sous-ensemble de mise en forme comprenant une pluralité de structures de mise en forme (20) dans lequel au moins deux sous-ensembles de mise en forme sont configurés pour mettre en forme le faisceau lumineux émergent (32) sur au moins la zone commune de la paroi à éclairer (40).

## Patentansprüche

1. Formgebungsvorrichtung (10) für einen aus einem Kollimator stammenden primären Lichtstrahl (30), wobei die Formgebungsvorrichtung eine Vielzahl von Formgebungsstrukturen (20) umfasst, wobei jede Formgebungsstruktur (20) mindestens eine erste optische Oberfläche (22) umfasst, die ausgebildet ist, um aufkommende Strahlen (32) in Richtung einer zu beleuchtenden Wand (40) zu lenken, wobei mindestens zwei Formgebungsstrukturen (20) aus der Vielzahl von Formgebungsstrukturen (20) ausgebildet sind, um die jeweiligen aufkommenden Strahlen (32) auf mindestens einen gemeinsamen Bereich der zu beleuchtenden Wand (40) zu lenken, wobei die Formgebungsstrukturen (20) regelmäßig entlang einer Abstandsachse (E) im Wesentlichen senkrecht zu einer Zwischenachse (I) parallel zum primären Lichtstrahl (30) verteilt sind und sich längs in einer Erstreckungsrichtung (D) im Wesentlichen senkrecht zur Zwischenachse und zur Abstandsachse erstrecken, wobei die erste optische Oberfläche (22) jeder Formgebungsstruktur (20) eine optische Ebene definiert, die im Wesentlichen parallel zur Zwischenachse verläuft (I) ;
jede Formgebungsstruktur (20) der Vielzahl von Formgebungsstrukturen (20) sich weiter gemäß einem Elementarmuster erstrecken, wobei sich das Elementarmuster gemäß der Erstreckungsrichtung (D) wiederholt und im Wesentlichen sinusförmig ist.

2. Formgebungsvorrichtung (10) nach Anspruch 1, wobei die Formgebungsstrukturen (20) der Vielzahl von Formgebungsstrukturen (20) identisch sind.

3. Formgebungsvorrichtung nach einem der Ansprüche 1 oder 2, wobei jede Formgebungsstruktur (20) eine zweite optische Oberfläche (24) umfasst, die ausgebildet ist, um eine vollständige innere Reflexion des primären Lichtstrahls (30) zu erzeugen.

4. Formgebungsvorrichtung (10) nach einem der Ansprüche 1 bis 3, wobei die Vielzahl von Formgebungsstrukturen (20) mindestens 10 Formgebungsstrukturen (20) umfasst.

5. Formgebungsvorrichtung (10) nach einem der Ansprüche 1 bis 4, wobei sich jede Formgebungsstruktur (20) der Vielzahl von Formgebungsstrukturen (20) kontinuierlich erstreckt.

6. Formgebungsvorrichtung (10) nach Anspruch 5, wobei sich jede Formgebungsstruktur (20) der Vielzahl von Formgebungsstrukturen (20) ableitbar erstreckt.

7. Formgebungsvorrichtung (10) nach einem der Ansprüche 1 bis 6, wobei die Formgebungsvorrichtung (10) eine Kollimationsoptik (50) umfasst, die ausgebildet ist, um den primären Lichtstrahl (30) aus einem einfallenden Lichtstrahl (28) zu erhalten.

8. Formgebungsvorrichtung (10) nach Anspruch 7, wobei die Formgebungsvorrichtung eine Lichtquelle umfasst, die ausgebildet ist, um den einfallenden Lichtstrahl (28) bereitzustellen.

9. Formgebungsvorrichtung (10) nach Anspruch 8, wobei die Lichtquelle eine Leuchtdiode ist.

10. Formgebungsvorrichtung (10) nach Anspruch 7, wobei die Kollimationsoptik (50) und die Vielzahl von Formgebungsstrukturen (20) aus einem einzigen einteiligen mechanischen Teil gebildet sind.

11. Formgebungsvorrichtung (10) nach einem der Ansprüche 1 bis 10, wobei die Vielzahl von Formgebungsstrukturen (20) aus einer Vielzahl von Formgebungsuntereinheiten besteht, wobei jede Formgebungsuntereinheit eine Vielzahl von Formgebungsstrukturen (20) umfasst, wobei mindestens zwei Formgebungsuntereinheiten ausgebildet sind, um den aufkommenden Lichtstrahl (32) in mindestens dem gemeinsamen Bereich der zu beleuchtenden Wand (40) in Form zu bringen.

## Claims

1. A device (10) for shaping a primary light beam (30) originating from a collimator, wherein the shaping device comprises a plurality of shaping structures (20), each shaping structure (20) comprising at least one first optical surface (22) configured to direct emergent beams (32) towards a wall to be illuminated (40), wherein at least two shaping structures (20) among the plurality of shaping structures (20) are configured to direct the respective emergent beams (32) onto at least one common area of the wall to be illuminated (40), wherein the shaping structures (20) are regularly distributed along a spacing axis (E) substantially perpendicular to an intermediate axis (l) parallel to the primary light beam (30) and extend longitudinally along an extension direction (D) substantially perpendicular to the intermediate axis and to the spacing axis, the first optical surface (22) of each shaping structure (20) defining an optical plane substantially parallel to the intermediate axis (I);
each shaping structure (20) of the plurality of shaping structures (20) further extending according to an elementary pattern, said elementary pattern being repeated along the extension direction (D) and being substantially sinusoidal.

2. The shaping device (10) according to claim 1, wherein the shaping structures (20) of the plurality of shaping structures (20) are identical.

3. The shaping device according to any one of claims 1 or 2, wherein each shaping structure (20) comprises a second optical surface (24) configured to achieve a total internal reflection of the primary light beam (30).

4. The shaping device (10) according to any one of claims 1 to 3, wherein the plurality of shaping structures (20) comprises at least 10 shaping structures (20).

5. The shaping device (10) according to any one of claims 1 to 4, wherein each shaping structure (20) of the plurality of shaping structures (20) extends continuously.

6. The shaping device (10) according to claim 5, wherein each shaping structure (20) of the plurality of shaping structures (20) extends in a differentiable manner.

7. The shaping device (10) according to any one of claims 1 to 6, wherein the shaping device (10) comprises collimating optics (50) configured to obtain the primary light beam (30) from an incident light beam (28).

8. The shaping device (10) according to claim 7, wherein the shaping device comprises a light source configured to provide the incident light beam (28).

9. The shaping device (10) according to claim 8, wherein the light source is a light-emitting diode.

10. The shaping device (10) according to claim 7, wherein the collimating optics (50) and the plurality of shaping structures (20) are formed as a single monolithic mechanical part.

11. The shaping device (10) according to any one of claims 1 to 10, wherein the plurality of shaping structures (20) consists of a plurality of shaping subassemblies, with each shaping subassembly comprising a plurality of shaping structures (20), wherein at least two shaping subassemblies are configured to shape the emergent light beam (32) onto at least the common area of the wall to be illuminated (40).
